# FASCICULE DE BREVET EUROPEEN

(11) **EP 3 727 185 B1**
(45) Date de publication et mention de la délivrance du brevet: **15.03.2023**
(21) Numéro de dépôt: 18826114.3
(22) Date de dépôt: 14.12.2018
(51) Int. Cl.: A61C 8/00

(54) **IMPLANT DENTAIRE A PENETRATION TRANSMUCOSALE PARTIELLE, ET ENSEMBLE PROTHETIQUE COMPORTANT UN TEL IMPLANT**
ZAHNIMPLANTAT MIT PARTIELLER TRANSMUKOSALER DURCHDRINGUNG UND PROTHESENANORDNUNG MIT EINEM SOLCHEN IMPLANTAT
DENTAL IMPLANT WITH PARTIAL TRANSMUCOSAL PENETRATION, AND PROSTHETIC ASSEMBLY COMPRISING SUCH AN IMPLANT

(30) Priorité: 18.12.2017 FR 1762369
(43) Date de publication de la demande: 28.10.2020
(73) Titulaire: ANTHOGYR, 74700 Sallanches (FR)
(72) Inventeur: RICHARD, Hervé, 73590 Notre Dame De Bellecombe (FR)
(74) Mandataire: Cabinet Poncet
(86) Numéro de dépôt international: PCT/IB2018/060124
(87) Numéro de publication internationale: WO 2019/123179

(56) Documents cités:
- EP-A1- 2 008 612
- EP-A1- 3 034 033
- DE-A1- 4 407 993
- FR-A1- 2 931 056
- FR-A1- 2 942 952
- FR-A1- 3 012 318
- US-A- 5 022 860

## Description

### DOMAINE TECHNIQUE DE L'INVENTION

La présente invention concerne le domaine dentaire, et concerne plus particulièrement un implant dentaire destiné à être inséré dans l'os de la mâchoire du patient, ainsi qu'un ensemble prothétique comportant un tel implant.

Généralement, un implant dentaire s'étend selon un premier axe longitudinal entre une extrémité proximale et une extrémité distale, et comporte au moins :
- un tronçon proximal endo-osseux destiné à être enfoui dans l'os de la mâchoire du patient,
- un logement intérieur de connexion s'étendant depuis l'extrémité distale et en direction de l'extrémité proximale.

On connaît des implants dentaires destinés à être enfouis en totalité dans l'os, de façon à affleurer au niveau de l'os (placement juxta osseux) ou de façon à être situés très légèrement en-dessous du niveau de l'os. Ces implants dentaires sont couramment qualifiés d'« implants bone level ». Trois protocoles de pose sont envisageables pour de tels implants bone level.

Un premier protocole de pose consiste, après implantation dans l'os, à obturer le logement intérieur de connexion à l'aide d'une pièce de fermeture au-dessus de laquelle le praticien suture les tissus mous. On dit alors que l'implant dentaire est « mis en nourrice ». Après quelques mois, le praticien doit retirer la pièce de fermeture pour la remplacer par une pièce de cicatrisation. Préalablement, le praticien effectue un sondage pour déterminer l'emplacement de l'implant dentaire, puis découpe localement la gencive pour extraire la pièce de fermeture (on parle de « deuxième temps chirugical »). Le praticien insère ensuite la pièce de cicatrisation dans l'implant dentaire. Lors du deuxième temps chirurgical, la gencive est agressée. Il se produit des saignements à proximité immédiate de l'implant dentaire et de l'os, et on endommage la barrière d'étanchéité formée par la gencive (par son attache conjonctive) entre l'os et le milieu buccal. Ultérieurement, la pièce de cicatrisation est retirée pour permettre la pénétration d'un composant prothétique dentaire, de type pilier dentaire transvissé ou prothèse dentaire transvissée par exemple, dans le logement intérieur de connexion. Là encore, l'attache conjonctive de la gencive (attache de la partie de l'épithélium la plus proche de l'os) sur la pièce de cicatrisation est rompue : il se produit des saignements à proximité immédiate de l'implant dentaire et de l'os, et on endommage la barrière d'étanchéité entre l'os et le milieu buccal. Ces agressions répétées de la gencive et ces saignements rendent incertaine la qualité de l'ostéo-intégration de l'implant dentaire.

Un deuxième protocole de pose consiste à insérer directement une pièce de cicatrisation dans l'implant dentaire, sans passer par l'étape de mise en nourrice avec une pièce de fermeture. Le deuxième temps chirurgical est évité. Mais le retrait de la pièce de cicatrisation rompt toujours l'attache conjonctive de la gencive qui s'est formée autour de la pièce de cicatrisation. Il demeure ainsi une agression de la gencive et des saignements rendant incertaine la qualité de l'ostéo-intégration de l'implant dentaire.

Si la qualité de l'os le permet, un troisième protocole de pose consiste à insérer un composant prothétique dentaire provisoire directement dans l'implant dentaire, sans passer par les étapes de mise en nourrice avec une pièce de fermeture et de cicatrisation avec une pièce de cicatrisation, pour une mise en fonction immédiate de l'implant dentaire. Le composant prothétique dentaire provisoire doit toutefois être retiré quelque temps après pour permettre la pénétration du composant prothétique dentaire (définitif), de type pilier dentaire transvissé ou prothèse dentaire transvissée par exemple, dans le logement intérieur de connexion. Le retrait du composant prothétique dentaire provisoire altère là encore l'attache conjonctive de la gencive qui adhère au composant prothétique dentaire provisoire. Il demeure ainsi une agression de la gencive, et des saignements rendant incertaine la qualité de l'ostéo-intégration de l'implant dentaire.

Pour limiter les agressions de la gencive, on a parfois recours à des implants dentaires destinés à être enfouis seulement en partie dans l'os, ces implants dentaires ayant un tronçon proximal endo-osseux prolongé à l'écart de l'extrémité proximale par un tronçon distal d'implant destiné à émerger hors de l'os de la mâchoire du patient. Ces implants dentaires sont destinés à dépasser au-dessus du niveau de l'os pour se prolonger jusqu'au niveau de la surface de la gencive ou légèrement en-dessous. Ces implants dentaires, destinés à traverser la muqueuse en totalité, sont couramment qualifiés d'« implants tissue level ».

Lors de la pose d'un tel implant tissue level, le praticien suture les tissus mous autour du tronçon distal d'implant. L'attache conjonctive de la gencive se forme autour du tronçon distal d'implant, lequel est inamovible (sauf à extraire l'implant dentaire complet).

L'inconvénient est que tout retrait gingival, même faible, rend très vite visible le tronçon distal d'implant (qui est le plus souvent gris en raison de sa matière généralement métallique), ce qui est très inesthétique.

Le document FR 2 942 952 A1 décrit un implant dentaire à tronçon proximal endo-osseux fileté destiné à être enfoui dans l'os de la mâchoire du patient, le tronçon proximal endo-osseux étant prolongé par un tronçon distal d'implant qui est cylindrique et dépourvu de filetage. Ce tronçon distal d'implant cylindrique présente, à sa base le reliant au tronçon proximal endo-osseux adjacent, un diamètre qui est égal au diamètre du tronçon proximal endo-osseux adjacent.

Les documents FR 2 931 056 A1 et US 5,022,860 A décrivent un implant dentaire à tronçon proximal endo-osseux fileté destiné à être enfoui dans l'os de la mâchoire du patient, le tronçon proximal endo-osseux étant prolongé par un tronçon distal d'implant qui s'évase à l'écart du tronçon proximal endo-osseux et qui est dépourvu de filetage. Le tronçon distal d'implant évasé présente, à sa base le reliant au tronçon proximal endo-osseux adjacent, un diamètre qui est égal au diamètre du tronçon proximal endo-osseux adjacent.

Le document EP 3 034 033 A1 décrit un implant dentaire à tronçon proximal endo-osseux fileté destiné à être enfoui dans l'os de la mâchoire du patient, le tronçon proximal endo-osseux étant prolongé par un tronçon distal d'implant qui est cylindrique et muni à son sommet d'un chanfrein lui conférant un caractère globalement convergent. Le tronçon distal d'implant présente, à sa base le reliant au tronçon proximal endo-osseux adjacent, un diamètre qui est supérieur au diamètre du tronçon proximal endo-osseux adjacent, ce qui se remarque par la présence d'un léger épaulement à facette orientée vers l'extrémité proximale de l'implant.

### EXPOSE DE L'INVENTION

Un problème proposé par la présente invention est de fournir un implant dentaire pouvant être posé en bouche du patient en limitant les risques d'agression de la gencive, et plus particulièrement de son attache conjonctive.

Simultanément, la présente invention vise à limiter les risques de perception inesthétique de l'implant dentaire en cas de retrait gingival.

Pour atteindre ces objets ainsi que d'autres, l'invention propose un implant dentaire selon la revendication 1.

Le tronçon distal d'implant prolonge le tronçon proximal endo-osseux, de sorte que l'ensemble des deux tronçons est formé d'une seule pièce.

Lorsqu'un tel implant est inséré dans l'os du patient avec son tronçon proximal endo-osseux enfoui dans l'os et son tronçon distal d'implant émergeant hors de l'os, le praticien suture la gencive autour du tronçon distal d'implant. L'attache conjonctive de la gencive se forme ainsi autour du tronçon distal d'implant, dans le resserrement procuré par la première gorge annulaire, et n'est ensuite pas agressée lors du retrait d'une pièce de fermeture, d'une pièce de cicatrisation ou d'un composant prothétique dentaire provisoire. Il est ainsi maintenu une barrière d'étanchéité satisfaisante entre l'os et le milieu buccal.

Le resserrement de la gencive dans la première gorge annulaire permet de former une chicane contribuant à améliorer l'étanchéité en limitant les risques de pénétration d'impuretés entre le tronçon proximal endo-osseux et l'os de la mâchoire.

L'état de surface du tronçon distal d'implant procure un contact non agressif avec la gencive, et à tout le moins limite le risque d'un retrait gingival radialement à l'écart du tronçon distal d'implant. Et la hauteur dudit tronçon distal d'implant est suffisamment importante pour une attache conjonctive satisfaisante (notamment en terme d'étanchéité pour protéger l'os en dessous), et est suffisamment réduite pour limiter les risques qu'un retrait gingival, par réduction de la hauteur de la gencive, occasionne une perception visuelle inesthétique de l'implant dentaire.

Le tronçon endo-osseux est muni d'un filetage extérieur qui s'étend en direction de l'extrémité distale d'implant dentaire en s'interrompant avant la première gorge annulaire. La chicane (et donc l'étanchéité) est ainsi homogène selon toutes les directions radiales à l'écart du premier axe longitudinal. Le tronçon proximal endo-osseux débute ainsi, à l'écart du tronçon distal d'implant, par un tronçon cylindrique venant obturer de façon quasi étanche l'orifice du trou recevant l'implant dentaire.

De préférence, l'implant dentaire peut comporter un diamètre extérieur maximal inférieur ou égal à 3 mm. Un tel diamètre permet une insertion dans des zones où la place disponible est réduite (en partie antérieure de la mâchoire notamment).

Avantageusement, le rapport entre le diamètre du tronçon proximal endo-osseux adjacent et le diamètre de la base peut être compris entre 1,09 et 1,50. Un tel ratio permet un resserrement de la gencive dans la première gorge annulaire formant une chicane améliorant de façon conséquente l'étanchéité.

Avantageusement, l'implant dentaire est en titane, ou en alliage de titane, ou en zircone, ou alliage de zircone.

De préférence, le tronçon distal d'implant peut être anodisé en couleur rose. Ainsi, si par malchance il se produisait malgré tout un retrait gingival rendant visible le tronçon distal d'implant, la couleur rose de ce dernier limiterait la gêne inesthétique.

Avantageusement, le logement intérieur de connexion comprend un tronçon à section transversale non circulaire. Le tronçon à section transversale non circulaire peut coopérer par sa forme avec un tronçon (ayant également une section transversale non circulaire) d'un composant prothétique dentaire pour permettre une indexation de ce dernier autour du premier axe longitudinal.

De préférence, le logement intérieur de connexion peut comprendre, dans le tronçon distal d'implant, une portée intérieure tronconique s'évasant vers l'extrémité distale à l'écart du premier axe longitudinal. Une telle portée est apte à coopérer par emmanchement conique avec un tronçon mâle proximal d'un composant prothétique dentaire. Un emmanchement conique présente une bonne étanchéité, et contribue à limiter le risque d'infiltration ou de stagnation d'impuretés (bactéries notamment) pouvant mener à un retrait gingival.

Avantageusement, le tronçon distal d'implant peut comporter une surface extérieure tronconique présentant un angle sensiblement égal à celui de la portée intérieure tronconique. Le tronçon distal d'implant présente ainsi une paroi d'épaisseur sensiblement constante sur toute sa hauteur, ce qui contribue à favoriser une répartition homogène des contraintes mécaniques entre le composant dentaire et l'implant dentaire.

Selon un autre aspect de la présente invention, il est proposé un ensemble selon la revendication 9.

Les dentistes recommandent souvent de parfaire le nettoyage de dents au moyen d'un fil dentaire. Les patients utilisant du fil dentaire peuvent hélas parfois faire pénétrer celui-ci jusqu'à l'attache conjonctive de la gencive, voire parfois rompent celle-ci avec le fil dentaire. Cela provoque à nouveau des saignements à proximité immédiate de l'implant dentaire et de l'os, et une dégradation de la barrière d'étanchéité formée par la gencive entre l'os et le milieu buccal.

Le risque d'endommagement de l'attache conjonctive de la gencive par le fil dentaire est ici limité au moyen de la deuxième gorge annulaire formée juste au-dessus du tronçon distal d'implant après assemblage du composant prothétique dentaire avec l'implant dentaire. Lorsque le fil dentaire descend le long du composant prothétique dentaire (en étant en appui radial sur ledit composant prothétique dentaire), il pénètre dans la deuxième gorge qui l'empêche de descendre plus bas si le patient ne relâche pas la tension qu'il exerce par traction des deux brins du fil dentaire. Lors de la pénétration du fil dentaire dans la deuxième gorge, il se produit sur le fil dentaire un à-coup perceptible par le patient, lequel s'arrête alors de descendre le fil dentaire le long du premier axe longitudinal. L'attache conjonctive de la gencive formée dans la première gorge est alors préservée de toute dégradation par contact avec le fil dentaire.

De préférence, le rapport entre le diamètre du sommet et le diamètre du tronçon mâle proximal du composant prothétique dentaire se trouvant au niveau dudit sommet lorsque le composant prothétique dentaire est emmanché dans la portée intérieure tronconique de l'implant dentaire, peut être compris entre 1,2 et 1,4.

Un tel resserrement permet d'une part de conserver des dimensions suffisantes pour le tronçon mâle proximal afin que celui-ci présente des caractéristiques mécaniques lui permettant de résister aux efforts de mastication. Et un tel resserrement permet d'autre part une retenue satisfaisante du fil dentaire lors de sa descente le long du premier axe longitudinal (à tout le moins perceptible par le patient).

Avantageusement, on peut prévoir que :
- le composant prothétique dentaire est de type pilier dentaire transvissé ou prothèse dentaire transvissée, comprenant un logement traversant pour le passage d'une vis de fixation,
- le logement intérieur de connexion comprend un tronçon proximal fileté intérieurement destiné à recevoir par vissage la vis de fixation.

De préférence, on peut prévoir que :
- le logement intérieur de connexion comprend un tronçon à section transversale non circulaire,
- le tronçon mâle proximal du composant prothétique dentaire comprend un tronçon à section transversale non circulaire apte à coopérer avec le tronçon cylindrique à section transversale non circulaire du logement intérieur de connexion pour indexer en rotation le composant prothétique dentaire par rapport à l'implant dentaire autour du premier axe longitudinal.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue de côté et en coupe longitudinale d'un implant dentaire selon un mode de réalisation particulier de la présente invention ;
- la figure 2 est une vue de côté de l'implant dentaire de la figure 1 ;
- la figure 3 est une vue de dessus et en coupe transversale de l'implant dentaire de la figure 1 ;
- la figure 4 est une vue de côté en éclaté d'un ensemble selon un mode de réalisation particulier de la présente invention, comprenant l'implant dentaire de la figure 1 et un composant prothétique dentaire de type pilier dentaire transfixé ;
- la figure 5 est une vue de côté et en coupe longitudinale de l'ensemble de la figure 4 à l'état assemblé ;
- la figure 6 est une vue de côté en éclaté d'un ensemble selon un mode de réalisation particulier de la présente invention, comprenant l'implant dentaire de la figure 1 et un composant prothétique dentaire de prothèse dentaire transfixée ;
- la figure 7 est une vue de côté et en coupe longitudinale de l'ensemble de la figure 6 à l'état assemblé ; et
- la figure 8 est une vue de côté de l'ensemble de la figure 5 schématisant sa position après insertion dans l'os de la mâchoire d'un patient.

### DESCRIPTION DES MODES DE REALISATION PREFERES

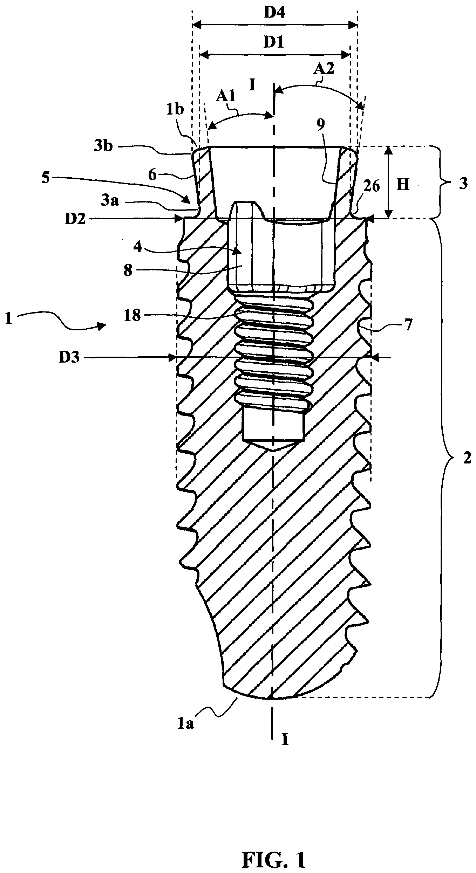

Sur les figures 1 à 3 est illustré un mode de réalisation particulier d'implant dentaire 1 selon la présente invention.

Cet implant dentaire 1 s'étend selon un premier axe longitudinal I-I entre une extrémité proximale 1a et une extrémité distale 1b, et comporte :
- un tronçon proximal endo-osseux 2 destiné à être enfoui dans l'os de la mâchoire du patient, prolongé à l'écart de l'extrémité proximale 1a par un tronçon distal d'implant 3 destiné à émerger hors de l'os de la mâchoire du patient,
- un logement intérieur de connexion 4 s'étendant depuis l'extrémité distale 1b et en direction de l'extrémité proximale 1a.

Le tronçon distal d'implant prolongeant le tronçon proximal endo-osseux, ceux-ci sont formés d'une seule pièce, comme cela est mis en évidence à l'aide des hachures présentes sur la vue en coupe de la figure 1.

Le tronçon distal d'implant 3 s'étend selon une hauteur H le long du premier axe longitudinal l-I en direction de l'extrémité distale 1b depuis une base 3a vers un sommet 3b, en s'évasant depuis la base 3a vers le sommet 3b à l'écart du premier axe longitudinal l-I.

La base 3a présente un diamètre D1 inférieur à un diamètre D2 du tronçon proximal endo-osseux 2 adjacent, de façon à former une première gorge annulaire 5.

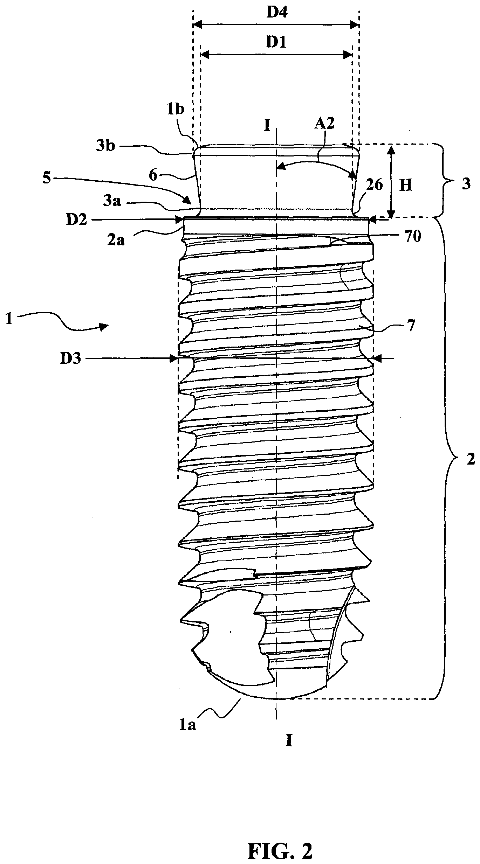

Sur les figures 1 et 2, on voit que le tronçon distal d'implant 3 se raccorde au tronçon proximal endo-osseux 2 adjacent par un congé de raccordement 26 (optionnel, destiné à limiter le phénomène de concentration de contrainte mécanique en cette zone de liaison). Le diamètre D1 de la base 3a est ici le diamètre le plus faible du tronçon distal d'implant 3, et est en conséquence pris juste au-dessus du congé de raccordement 26.

Le tronçon distal d'implant 3 comporte une surface extérieure 6 présentant une rugosité Ra inférieure ou égale à 0,2 µm.

La hauteur selon laquelle le tronçon distal d'implant 3 s'étend depuis sa base 3a vers son sommet 3b est comprise entre 1,2 mm et 1,5 mm.

L'implant dentaire 1 comporte un diamètre extérieur maximal D3 inférieur ou égal à 3 mm pour permettre une implantation dans des zones où la place disponible est réduite.

Le rapport entre le diamètre D2 du tronçon proximal endo-osseux 2 adjacent et le diamètre D1 de la base 3a est compris entre 1,09 et 1,50.

Le logement intérieur de connexion 4 comprend, dans le tronçon distal d'implant 3, une portée intérieure tronconique 9 s'évasant selon un angle A1 vers l'extrémité distale 1b à l'écart du premier axe longitudinal l-I. La surface extérieure 6 du tronçon distal d'implant 3 est également tronconique, et présente un angle A2 sensiblement égal à l'angle A1 de la portée intérieure tronconique 9.

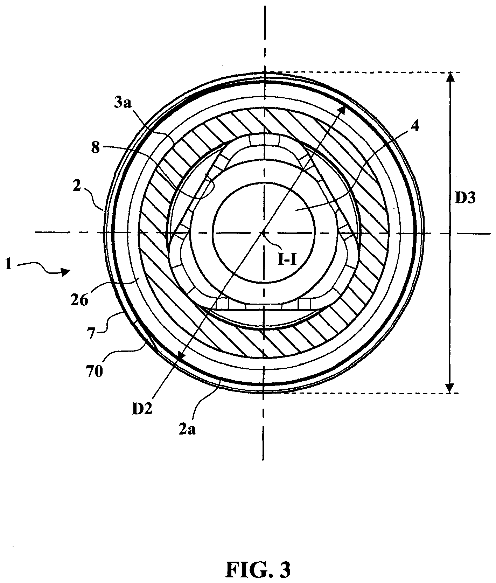

On voit plus particulièrement sur la figure 2 que le tronçon endo-osseux 2 est muni d'un filetage extérieur 7 qui s'étend en direction de l'extrémité distale 1b d'implant dentaire 1 en s'interrompant avant la première gorge annulaire 5. Cette interruption 70 est également rendue visible par la figure 3. La figure 3 est une vue en coupe transversale de l'implant dentaire 1 au niveau de la base 3a, et montre que le tronçon proximal endo-osseux 2 adjacent vu de dessus se présente sous la forme d'un disque de diamètre D2. Le tronçon proximal endo-osseux 2 débute ici, à l'écart du tronçon distal d'implant 3, par un tronçon cylindrique 2a à section transversale circulaire de diamètre D2.

L'implant dentaire 1 est en titane, ou en alliage de titane, ou en zircone, ou en alliage de zircone. Le tronçon distal d'implant 3 est de préférence anodisé en couleur rose sur sa surface extérieure 6.

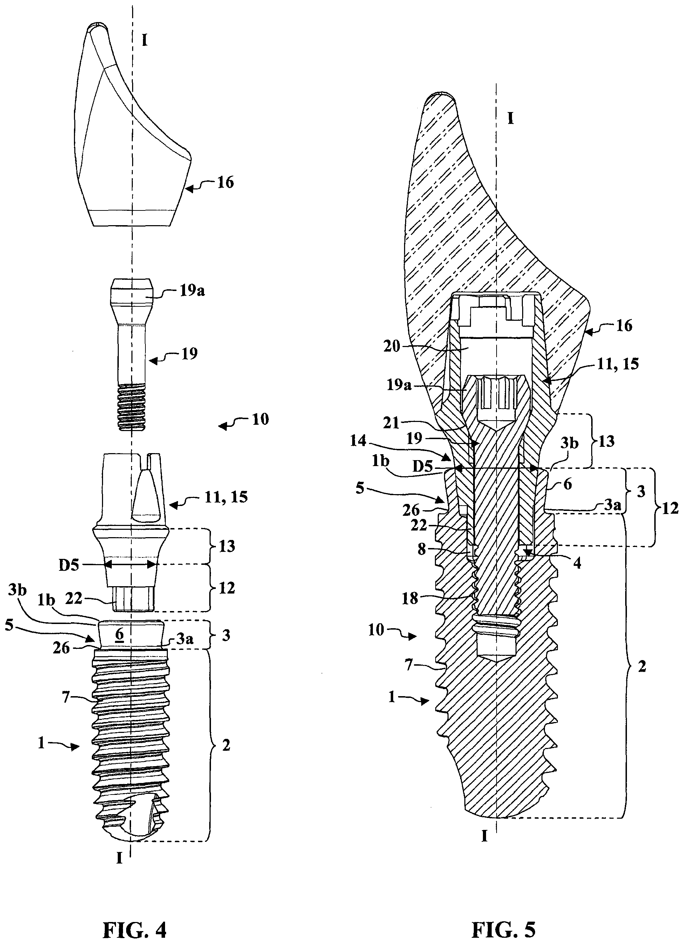

On voit plus particulièrement sur les figures 1 et 3 que le logement intérieur de connexion 4 comprend un tronçon 8 (cylindrique ici) à section transversale non circulaire. Le tronçon 8 comporte plus particulièrement une section transversale sensiblement triangulaire (à angles arrondis). Le logement intérieur de connexion 4 comprend en outre un tronçon proximal fileté intérieurement 18 destiné à recevoir par vissage une vis de fixation (référencée 19 sur les figures 4 à 7).

Sur les figures 4 et 5 d'une part et 6 et 7 d'autre part est illustré un ensemble 10 comprenant :
- un implant dentaire 1 tel qu'illustré sur les figures 1 à 3,
- un composant prothétique dentaire 11, comprenant un tronçon mâle proximal 12 destiné à être reçu par emmanchement conique dans la portée intérieure tronconique 9 de l'implant dentaire 1.

Sur les figures 4 et 5, le composant prothétique dentaire 11 est un pilier dentaire 15 destiné à recevoir par emmanchement une couronne 16.

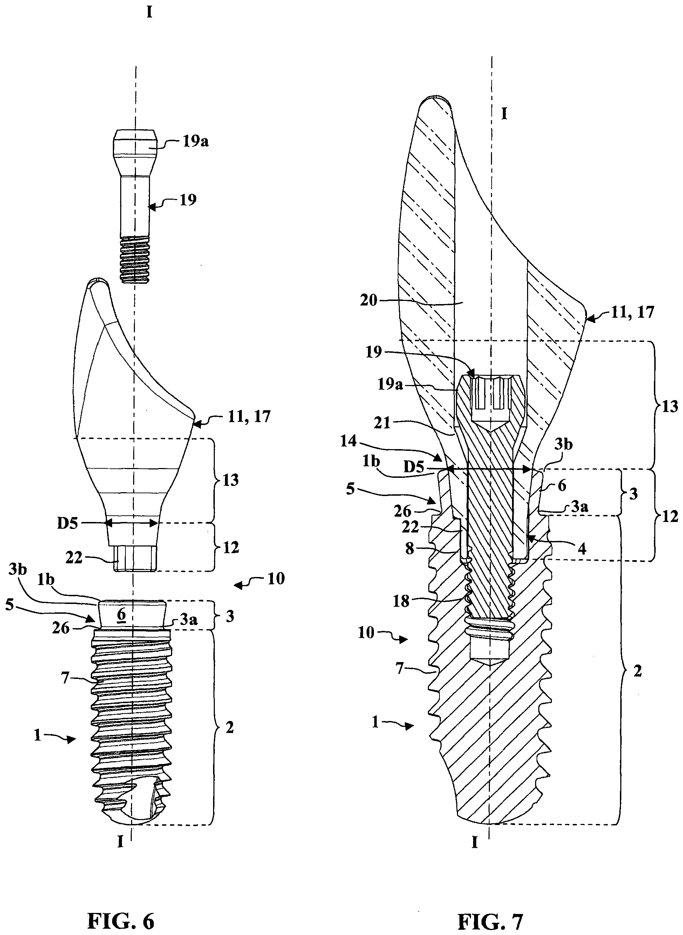

Sur les figures 6 et 7, le composant prothétique dentaire 11 est une prothèse dentaire 17. La prothèse dentaire 17 est de préférence formée d'un seul tenant en céramique. Elle est par exemple obtenue par usinage d'un bloc en céramique.

Que ce soit dans le cas du pilier dentaire 15 ou de la prothèse dentaire 17, le composant prothétique dentaire 11 comprend un logement traversant 20 pour le passage d'une vis de fixation 19. Ce logement traversant 20 comporte un siège 21 contre lequel est destinée à venir en appui la tête 19a de la vis 19 pour retenir le composant prothétique dentaire 11 sur l'implant dentaire 1.

Le composant prothétique dentaire 11 comprend un tronçon médian 13, adjacent au tronçon mâle proximal 12, et ayant une section transversale extérieure qui augmente progressivement à l'écart du tronçon mâle proximal 12 de façon à former une deuxième gorge annulaire 14 avec l'extrémité distale 1b d'implant dentaire 1.

Le rapport entre le diamètre D4 du sommet 3b (voir figures 1 et 2) et le diamètre D5 du tronçon mâle proximal 12 du composant prothétique dentaire 11 se trouvant au niveau dudit sommet 3b, lorsque le composant prothétique dentaire 11 est emmanché dans la portée intérieure tronconique 9 de l'implant dentaire 1 (voir figures 4 à 7), est compris entre 1,2 et 1,4.

Le tronçon mâle proximal 12 (cylindrique ici) du composant prothétique dentaire 11 comprend un tronçon 22 à section transversale non circulaire apte à coopérer (par complémentarité de forme dans le cas présent) avec le tronçon 8 (cylindrique également) à section transversale non circulaire du logement intérieur de connexion 4. Les tronçons 8 et 22 permettent ainsi une indexation en rotation du composant prothétique dentaire 11 par rapport à l'implant dentaire 1 autour du premier axe longitudinal l-I.

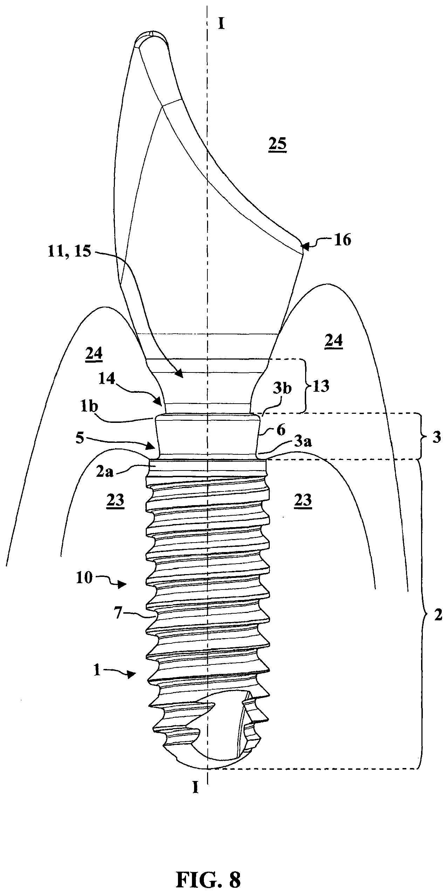

L'utilisation d'un implant dentaire 1 et d'un ensemble 10 selon l'invention va désormais être expliquée en lien avec la figure 8.

Sur la figure 8 est représenté un ensemble 10 tel qu'illustré sur les figures 4 et 5.

Lors de la pose, le praticien fore un trou dans l'os 23 (maxillaire ou mandibulaire du patient) à un diamètre adapté à la réception de l'implant dentaire 1.

L'implant dentaire 1 est ensuite inséré par vissage dans l'os 23 jusqu'à enfouissement complet de son tronçon proximal endo-osseux 2 dans l'os 23, comme illustré sur la figure 8.

Le praticien suture ensuite la gencive 24 autour du tronçon distal d'implant 3 (ainsi qu'autour d'une éventuelle pièce de cicatrisation ou d'un composant prothétique provisoire inséré dans le logement intérieur de connexion 4).

Pendant la période d'ostéo-intégration de l'implant dentaire 1, la gencive 24 cicatrise et forme son attache conjonctive, en sa partie immédiatement adjacente à l'os 23, selon une hauteur qui dépend du patient mais qui est généralement comprise entre 1,2 mm et 1,5 mm autour du tronçon distal d'implant 3. L'attache conjonctive de la gencive 24 vient ainsi à recouvrement de l'implant dentaire 1 grâce à son engagement (selon une nervure annulaire) dans la première gorge annulaire 5. Il est ainsi formé une chicane limitant le risque de pénétration d'impuretés entre le filetage extérieur 7 et l'os 23.

Lors du retrait de la pièce de cicatrisation (ou du composant prothétique provisoire), l'attache conjonctive en partie inférieure de la gencive 24 n'est pas affectée selon une hauteur d'environ 1,2 mm à 1,5 mm et reste en bonne place autour du tronçon distal d'implant 3. Un éventuel saignement lié à la rupture d'une adhérence de la gencive 24 sur la pièce de cicatrisation lors de son retrait se produira au-dessus du tronçon distal d'implant 3 et de l'attache conjonctive de la gencive 24. Les risques liés à ce saignement sont donc limités par le fait que l'attache conjonctive de la gencive 24 procure une bonne étanchéité entre l'os 23 et le milieu buccal 25 d'autre part.

Après retrait de la pièce de cicatrisation ou du composant prothétique provisoire, le praticien insère le composant prothétique dentaire 11 (pilier dentaire 15 ici) dans le logement intérieur de connexion 4 de l'implant dentaire 1 et emmanche celui-ci coniquement par coopération de la portée intérieure tronconique 9 avec le tronçon mâle proximal 12. Le praticien insère ensuite la vis de fixation 19 dans le logement traversant et visse cette dernière dans le tronçon proximal fileté intérieurement 18 jusqu'à ce que la tête 19a de la vis de fixation 19 vienne en appui sur le siège 21. Le pilier dentaire 15 est alors solidaire de l'implant dentaire 1, et le praticien peut achever son intervention en rapportant la couronne 16 sur le pilier dentaire 15.

Le tronçon médian 13, adjacent au tronçon mâle proximal 12, ayant une section transversale extérieure qui augmente progressivement à l'écart du tronçon mâle proximal 12, forme une deuxième gorge annulaire 14 avec l'extrémité distale 1b d'implant dentaire 1. Cette deuxième gorge 14 reçoit ultérieurement une partie de la gencive 24 selon une nervure annulaire qui s'oppose à un déplacement corono-apical de l'attache épithéliale de la gencive 24 (située au-dessus de l'attache conjonctive).

Finalement, la gencive 24 forme deux nervures annulaires venant s'engager dans les deux gorges 5 et 14. Ces deux nervures permettent une stabilité encore meilleure de l'os 23 sous la gencive 24.

L'engagement de la gencive 24 dans la deuxième gorge 14 limite aussi les risques d'un retrait gingival en direction de l'extrémité proximale 1a de l'implant dentaire 1. Sur la figure 8, l'implant dentaire 1 ne présente qu'une pénétration transmucosale partielle. En d'autres termes, l'implant dentaire 1 ne dépasse hors de l'os 23 que selon une hauteur inférieure à la hauteur de gencive 24. Tout cela contribue à limiter les risques que soit rendu visible l'implant dentaire 1.

Dans le cas d'un nettoyage de dents au moyen d'un fil dentaire, il arrive parfois avec les implants dentaires connus que le fil dentaire pénètre jusqu'à l'attache conjonctive de la gencive, et rompe même celle-ci. Cela provoque des saignements à proximité immédiate de l'implant dentaire et de l'os, et une dégradation de la barrière d'étanchéité formée par la gencive entre l'os et le milieu buccal.

Avec l'ensemble selon la présente invention, le risque d'endommagement de l'attache conjonctive de la gencive par le fil dentaire est ici limité au moyen de la deuxième gorge annulaire 14 formée juste au-dessus du tronçon distal d'implant 3 après assemblage du composant prothétique dentaire 11 avec l'implant dentaire 1. En effet, lorsque le fil dentaire descend le long du composant prothétique dentaire 11 (en étant en appui radial sur ledit composant prothétique dentaire 11), il pénètre dans la deuxième gorge 14 qui l'empêche de se déplacer plus loin en direction de l'extrémité proximale 1a si le patient ne relâche pas la tension qu'il exerce par traction des deux brins du fil dentaire. Lors de la pénétration du fil dentaire dans la deuxième gorge 14, il se produit sur le fil dentaire un à-coup perceptible par le patient, lequel arrête alors spontanément de descendre le fil dentaire le long du premier axe longitudinal l-I. L'attache conjonctive de la gencive formée dans la première gorge 5 est alors préservée de toute dégradation par contact avec le fil dentaire.

L'utilisation de l'ensemble 10 illustré sur les figures 6 et 7 est similaire à l'utilisation de l'ensemble 10 des figures 4 et 5 explicitée ci-dessus.

## Revendications

1. - Implant dentaire (1) s'étendant selon un premier axe longitudinal (l-I) entre une extrémité proximale (1a) et une extrémité distale (1b), comportant :
- un tronçon proximal endo-osseux (2) destiné à être enfoui dans l'os (23) de la mâchoire du patient,
- un tronçon distal d'implant (3) prolongeant le tronçon proximal endo-osseux (2) à l'écart de l'extrémité proximale (1a) et destiné à émerger hors de l'os (23) de la mâchoire du patient, ledit tronçon distal d'implant (3) comportant une surface extérieure (6) présentant une rugosité Ra inférieure ou égale à 0,2 µm,
- un logement intérieur de connexion (4) s'étendant depuis l'extrémité distale (1b) et en direction de l'extrémité proximale (1a),
dans lequel :
- le tronçon distal d'implant (3) s'étend selon une hauteur (H) le long du premier axe longitudinal (l-I) en direction de l'extrémité distale (1b) depuis une base (3a) vers un sommet (3b), en s'évasant depuis la base (3a) vers le sommet (3b) à l'écart du premier axe longitudinal (l-I),
- la hauteur (H) selon laquelle le tronçon distal d'implant (3) s'étend depuis sa base (3a) vers son sommet (3b) est comprise entre 1,2 mm et 1,5 mm,
**caractérisé en ce que** :
- la base (3a) présente un diamètre (D1) inférieur à un diamètre (D2) du tronçon proximal endo-osseux (2) adjacent, de façon à former une première gorge annulaire (5),
- le tronçon endo-osseux (2) est muni d'un filetage extérieur (7) qui s'étend en direction de l'extrémité distale (1b) d'implant dentaire (1) en s'interrompant avant la première gorge annulaire (5), de sorte que le tronçon proximal endo-osseux débute, à l'écart du tronçon distal d'implant, par un tronçon cylindrique (2a).

2. - Implant dentaire (1) selon la revendication 1, **caractérisé en ce qu'**il comporte un diamètre extérieur maximal (D3) inférieur ou égal à 3 mm.

3. - Implant dentaire (1) selon l'une des revendications 1 ou 2, **caractérisé en ce que** le rapport entre le diamètre (D2) du tronçon proximal endo-osseux (2) adjacent et le diamètre (D1) de la base (3a) est compris entre 1,09 et 1,50.

4. - Implant dentaire (1) selon l'une quelconque des revendications 1 à 3, **caractérisé en ce que** l'implant dentaire (1) est en titane, ou en alliage de titane, ou en zircone, ou en alliage de zircone.

5. - Implant dentaire (1) selon l'une quelconque des revendications 1 à 4, **caractérisé en ce que** le tronçon distal d'implant (3) est anodisé en couleur rose.

6. - Implant dentaire (1) selon l'une quelconque des revendications 1 à 5, **caractérisé en ce que** le logement intérieur de connexion (4) comprend un tronçon (8) à section transversale non circulaire.

7. - Implant dentaire (1) selon l'une quelconque des revendications 1 à 6, **caractérisé en ce que** le logement intérieur de connexion (4) comprend, dans le tronçon distal d'implant (3), une portée intérieure tronconique (9) s'évasant vers l'extrémité distale (1b) à l'écart du premier axe longitudinal (l-I).

8. - Implant dentaire (1) selon la revendication 7, **caractérisé en ce que** le tronçon distal d'implant (3) comporte une surface extérieure (6) tronconique présentant un angle (A2) sensiblement égal à celui (A1) de la portée intérieure tronconique (9).

9. - Ensemble (10) comprenant :
- un implant dentaire (1) selon l'une des revendications 7 ou 8,
- un composant prothétique dentaire (11) de type pilier dentaire (15) ou prothèse dentaire (17), comprenant un tronçon mâle proximal (12) destiné à être reçu par emmanchement conique dans la portée intérieure tronconique (9) de l'implant dentaire (1),
dans lequel le composant prothétique dentaire (11) comprend un tronçon médian (13), adjacent au tronçon mâle proximal (12), et ayant une section transversale extérieure qui augmente progressivement à l'écart du tronçon mâle proximal (12) de façon à former une deuxième gorge annulaire (14) avec l'extrémité distale (1b) d'implant dentaire (1).

10. - Ensemble (10) selon la revendication 9, **caractérisé en ce que** le rapport entre le diamètre (D4) du sommet (3b) et le diamètre (D5) du tronçon mâle proximal (12) du composant prothétique dentaire (11) se trouvant au niveau dudit sommet (3b) lorsque le composant prothétique dentaire (11) est emmanché dans la portée intérieure tronconique (9) de l'implant dentaire (1), est compris entre 1,2 et 1,4.

11. - Ensemble (10) selon l'une des revendications 9 ou 10, **caractérisé en ce que** :
- le composant prothétique dentaire (11) est de type pilier dentaire (15) transvissé ou prothèse dentaire (17) transvissée, comprenant un logement traversant (20) pour le passage d'une vis de fixation (19),
- le logement intérieur de connexion (4) comprend un tronçon proximal fileté intérieurement (18) destiné à recevoir par vissage la vis de fixation (19).

12. - Ensemble (10) selon l'une quelconque des revendications 9 à 11, **caractérisé en ce que** :
- le logement intérieur de connexion (4) comprend un tronçon (8) à section transversale non circulaire,
- le tronçon mâle proximal (12) du composant prothétique dentaire (11) comprend un tronçon (22) à section transversale non circulaire apte à coopérer avec le tronçon (8) à section transversale non circulaire du logement intérieur de connexion (4) pour indexer en rotation le composant prothétique dentaire (11) par rapport à l'implant dentaire (1) autour du premier axe longitudinal (l-I).

## Patentansprüche

1. Zahnimplantat (1), welches sich entlang einer ersten Längsachse (l-I) zwischen einem proximalen Ende (1a) und einem distalen Ende (1b) erstreckt, aufweisend:
- einen proximalen enossalen Abschnitt (2), der dazu bestimmt ist, im Knochen (23) des Kiefers des Patienten eingebettet zu werden,
- einen distalen Abschnitt (3) des Implantats, der den enossalen proximalen Abschnitt (2) vom proximalen Ende (1a) wegwärts verlängert und dazu bestimmt ist, aus dem Knochen (23) des Kiefers des Patienten herauszuragen, wobei der besagte distale Abschnitt (3) des Implantats eine äußere Oberfläche (6) mit einer Rauheit Ra von kleiner oder gleich 0,2 µm aufweist,
- ein inneres Verbindungslager (4), welches sich vom distalen Ende (1b) in Richtung des proximalen Endes (1a) erstreckt,
wobei:
- der distale Abschnitt (3) des Implantats sich entsprechend einer Höhe (H) entlang der ersten Längsachse (l-I) in Richtung des distalen Endes (1b) von einer Basis (3a) zu einem Scheitel (3b) hin erstreckt und sich dabei von der Basis (3a) zum Scheitel (3b) wegwärts von der ersten Längsachse (l-I) aufweitet,
- die Höhe (H), entsprechend der sich der distale Abschnitt des Implantats (3) von seiner Basis (3a) zu seinem Scheitel (3b) erstreckt, zwischen 1,2 mm und 1,5 mm umfasst,
**dadurch gekennzeichnet, dass:**
- die Basis (3a) einen Durchmesser (D1) hat, der kleiner ist als ein Durchmesser (D2) des angrenzenden enossalen proximalen Abschnitts (2), um eine erste ringförmige Nut (5) zu bilden,
- der enossale Abschnitt (2) mit einem Außengewinde (7) versehen ist, welches sich in Richtung des distalen Endes (1b) des Zahnimplantats (1) erstreckt und unterbrochen ist vor der ersten Ringnut (5), so dass der proximale enossale Abschnitt entfernt vom distalen Abschnitt des Implantats mit einem zylindrischen Abschnitt (2a) beginnt.

2. Zahnimplantat (1) nach Anspruch 1, **dadurch gekennzeichnet, dass** es einen maximalen Außendurchmesser (D3) kleiner oder gleich 3 mm aufweist.

3. Zahnimplantat (1) nach einem der Ansprüche 1 oder 2, **dadurch gekennzeichnet, dass** das Verhältnis zwischen dem Durchmesser (D2) des angrenzenden enossalen proximalen Abschnitts (2) und dem Durchmesser (D1) der Basis (3a) zwischen 1,09 und 1,50 liegt.

4. Zahnimplantat (1) nach einem der Ansprüche 1 bis 3, **dadurch gekennzeichnet, dass** das Zahnimplantat (1) aus Titan oder Titanlegierung oder Zirkonoxid oder Zirkonoxidlegierung ist.

5. Zahnimplantat (1) nach einem der Ansprüche 1 bis 4, **dadurch gekennzeichnet, dass** der distale Abschnitt (3) des Implantats in rosa Farbe eloxiert ist.

6. Zahnimplantat (1) nach einem der Ansprüche 1 bis 5, **dadurch gekennzeichnet, dass** das innere Verbindungslager (4) einen Abschnitt (8) mit nicht-kreisförmigem Querschnitt umfasst.

7. Zahnimplantat (1) nach einem der Ansprüche 1 bis 6, **dadurch gekennzeichnet, dass** das innere Verbindungslager (4) im distalen Abschnitt (3) des Implantats eine sich zum distalen Ende (1b) und wegwärts von der ersten Längsachse (l-I) aufweitende kegelstumpfförmige innere Anlagefläche (9) umfasst.

8. Zahnimplantat (1) nach Anspruch 7, **dadurch gekennzeichnet, dass** der distale Abschnitt (3) des Implantats eine kegelstumpfförmige Außenfläche (6) mit einem Winkel (A2) aufweist, der im Wesentlichen gleich dem (A1) der kegelstumpfförmigen inneren Anlagefläche (9) ist.

9. Anordnung (10), umfassend:
- ein Zahnimplantat (1) nach einem der Ansprüche 7 oder 8,
- eine zahnprothetische Komponente (11) vom Typ Zahnabutement (15) oder Zahnprothese (17), umfassend einen proximalen männlichen Abschnitt (12), der dazu bestimmt ist, durch konisches Einpassen in der sich verjüngenden inneren Anlagefläche (9) des Zahnimplantats (1) aufgenommen zu werden, wobei die zahnprothetische Komponente (11) einen mittleren Abschnitt (13) angrenzend an den proximalen männlichen Abschnitt (12) umfasst und einen äußeren Querschnitt hat, der sich derart progressiv wegwärts von dem proximalen männlichen Abschnitt (12) vergrößert, um eine zweite Ringnut (14) mit dem distalen Ende (1b) des Zahnimplantats (1) zu bilden.

10. Anordnung (10) nach Anspruch 9, **dadurch gekennzeichnet, dass** das Verhältnis zwischen dem Durchmesser (D4) des Scheitels (3b) und dem Durchmesser (D5) des proximalen männlichen Abschnitts (12) der zahnprothetischen Komponente (11), das an besagtem Scheitelpunkt (3b) vorliegt, wenn die zahnprothetische Komponente (11) in die konische Innenfläche (9) des Zahnimplantats (1) eingesetzt ist, zwischen 1,2 und 1,4 liegt.

11. Anordnung (10) nach einem der Ansprüche 9 oder 10, **dadurch gekennzeichnet, dass**:
- die zahnprothetische Komponente (11) vom Typ Zahnabutement (15) oder verschraubte Zahnprothese (17) ist, umfassend ein Durchgangslager (20) für die Passage einer Befestigungsschraube (19),
- das innere Verbindungslager (4) einen proximalen Abschnitt (18) mit Innengewinde umfasst, der dazu bestimmt ist, die Befestigungsschraube (19) durch Schrauben aufzunehmen.

12. Anordnung (10) nach einem der Ansprüche 9 bis 11, **dadurch gekennzeichnet, dass**:
- das innere Verbindungslager (4) einen Abschnitt (8) mit einem nicht-kreisförmigen Querschnitt umfasst,
- der proximale männliche Abschnitt (12) der zahnprothetischen Komponente (11) einen Abschnitt (22) mit einem nicht-kreisförmigen Querschnitt umfasst, der in der Lage ist, mit dem Abschnitt (8) mit nicht-kreisförmigem Querschnitt des inneren Verbindungslagers (4) zusammenzuwirken, um die zahnprothetische Komponente (11) relativ zum Zahnimplantat (1) um die Längsachse (l-I) rotatorisch zu indexieren.

## Claims

1. A dental implant (1) extending along a first longitudinal axis (l-I) between a proximal end (1a) and a distal end (1b), comprising:
- a proximal endosseous portion (2) intended to be embedded in the jawbone (23) of the patient,
- a distal implant portion (3) continuing the proximal endosseous portion (2) away from the proximal end (1a) and intended to protrude from the jawbone (23) of the patient, said distal implant portion (3) comprising an outer surface (6) having a roughness Ra of less than or equal to 0.2 µm,
- an inner connection recess (4) extending from the distal end (1b) and in the direction of the proximal end (1a),
in which:
- the distal implant portion (3) extends by a height (H) along the first longitudinal axis (l-I) in the direction of the distal end (1b) from a base (3a) to a top (3b), widening from the base (3a) to the top (3b) in the direction away from the first longitudinal axis (l-I),
- the height (H) by which the distal implant portion (3) extends from its base (3a) to its top (3b) is between 1.2 mm and 1.5 mm,
**characterized in that**:
- the base (3a) has a diameter (D1) smaller than a diameter (D2) of the adjacent proximal endosseous portion (2), so as to form a first annular groove (5),
- the endosseous portion (2) is provided with an external thread (7) which extends in the direction of the distal end (1b) of the dental implant (1) and is interrupted before the first annular groove (5), so that the proximal endosseous portion starts, away from the distal implant portion by a cylindrical portion (2a).

2. The dental implant (1) as claimed in claim 1, **characterized in that** it has a maximum external diameter (D3) of less than or equal to 3 mm.

3. The dental implant (1) as claimed in either of claims 1 and 2, **characterized in that** the ratio between the diameter (D2) of the adjacent proximal endosseous portion (2) and the diameter (D1) of the base (3a) is between 1.09 and 1.50.

4. The dental implant (1) as claimed in any one of claims 1 through 3, **characterized in that** the dental implant (1) is made of titanium, or titanium alloy, or of zirconia, or zirconia alloy.

5. The dental implant (1) as claimed in any one of claims 1 through 4, **characterized in that** the distal implant portion (3) is anodized in a pink color.

6. The dental implant (1) as claimed in any one of claims 1 through 5, **characterized in that** the inner connection recess (4) comprises a portion (8) of non-circular cross section.

7. The dental implant (1) as claimed in any one of claims 1 through 6, **characterized in that** the inner connection recess (4) comprises, in the distal implant portion (3), a frustoconical inner bearing surface (9) widening toward the distal end (1b) away from the first longitudinal axis (l-I).

8. The dental implant (1) as claimed in claim 7, **characterized in that** the distal implant portion (3) comprises a frustoconical outer surface (6) having an angle (A2) substantially equal to that (A1) of the frustoconical inner bearing surface (9).

9. An assembly (10) comprising:
- a dental implant (1) as claimed in either of claims 7 and 8,
- a dental prosthetic component (11) in the form of a dental abutment (15) or dental prosthesis (17), comprising a proximal male portion (12) intended to be received by conical fitting in the frustoconical inner bearing surface (9) of the dental implant (1),
in which the dental prosthetic component (11) comprises a middle portion (13), adjacent to the proximal male portion (12) and having an external cross section that increases progressively away from the proximal male portion (12) so as to form a second annular groove (14) with the distal end (1b) of the dental implant (1).

10. The assembly (10) as claimed in claim 9, **characterized in that** the ratio between the diameter (D4) of the top (3b) and the diameter (D5) of the proximal male portion (12) of the dental prosthetic component (11), located at said top (3b) when the dental prosthetic component (11) is fitted into the frustoconical inner bearing surface (9) of the dental implant (1), is between 1.2 and 1.4.

11. The assembly (10) as claimed in either of claims 9 and 10, **characterized in that**:
- the dental prosthetic component (11) is in the form of a screw-retained dental abutment (15) or screw-retained dental prosthesis (17), comprising a through-opening (20) for the passage of a fixation screw (19),
- the inner connection recess (4) comprises an internally threaded proximal portion (18) intended to receive the fixation screw (19) by screwing.

12. The assembly (10) as claimed in any one of claims 9 through 11, **characterized in that**:
- the inner connection recess (4) comprises a portion (8) of non-circular cross-section,
- the proximal male portion (12) of the dental prosthetic component (11) comprises a portion (22) of non-circular cross section adapted to cooperate with the portion (8) of non-circular cross section of the inner connection recess (4) for rotational indexing of the dental prosthetic component (11) with respect to the dental implant (1) about the first longitudinal axis (l-I).
